# EUROPÄISCHE PATENTSCHRIFT

(11) **EP 2 146 888 B1**
(45) Veröffentlichungstag und Bekanntmachung des Hinweises auf die Patenterteilung: **17.08.2011**
(21) Anmeldenummer: 08734930.4
(22) Anmeldetag: 01.04.2008
(51) Int. Cl.: B62B 7/06

(54) **KINDERWAGEN MIT EINEM ZUSAMMENKLAPPBAREN FAHRGESTELL**
STROLLER COMPRISING A COLLAPSIBLE FRAME
POUSSETTE COMPORTANT UN CHÂSSIS PLIABLE

(30) Priorität: 02.04.2007 DE 202007004932 U; 05.10.2007 DE 102007047702
(43) Veröffentlichungstag der Anmeldung: 27.01.2010
(73) Patentinhaber: Lang, Viktor, 75210 Keltern (DE)
(72) Erfinder: Lang, Viktor, 75210 Keltern (DE)
(74) Vertreter: Reinhardt, Harry
(86) Internationale Anmeldenummer: PCT/EP2008/002578
(87) Internationale Veröffentlichungsnummer: WO 2008/119547

(56) Entgegenhaltungen:
- EP-A- 1 693 275
- WO-A-03/074342
- WO-A-2004/097282
- ES-U- 1 063 937
- JP-A- 53 061 835

## Beschreibung

### Gebiet der Erfindung

Die Erfindung betrifft einen Kinderwagen mit einem zusammenklappbaren Fahrgestell nach dem Oberbegriff des Anspruches 1.

### Stand der Technik

Kinderwagen sind in vielen Ausführungen bekannt und werden bisher meist in Kinderwagen und Buggies unterschieden, wobei ein Kinderwagen in einer Richtung und um eine Achse zusammenklappt, während der Buggy üblicherweise um zwei Achsen zusammenklappt. Dieses Zusammenklappen geschieht meist über Scherengelenke, da dadurch insbesondere die Bauhöhe wesentlich reduziert werden kann, um den Kinderwagen bei Nichtgebrauch platzsparend zu transportieren. Die Verriegelung der Scherengestelle im Gebrauchszustand erfolgt mittels einer Verriegelung, die meist dem Schiebebügel oder dem Fahrgestell zugeordnet ist. Die Fußstütze ist um eine horizontale Achse schwenkbar und der Neigungswinkel kann mittels eines schwenkbaren Bügels eingestellt werden.

Die Gruppe der Kinderwagen hat meist den Nachteil, dass sie schwer sind und selbst zusammengeklappt ein großes Volumen aufweisen. Zudem muss man den zusammengeklappten Kinderwagen in gebückter Haltung vom Boden hochheben. Buggies sind hingegen in der Regel leichter und kleiner als ein Kinderwagen. Sie haben die Nachteile, dass das Zusammenklappen kompliziert und hakelig ist und man sich dabei bücken muss. Zusammengeklappt ist ein Buggy meist sehr lang (ca. 110 cm) und passt damit schlecht in den Kofferraum eines PKW. Er hat kleine Räder und daraus resultierend einen schlechten Fahrkomfort. Buggies sind kippanfällig und haben gegenüber dem Kinderwagen einen schlechteren Sitz-/Liegekomfort. Die meisten Buggies können nur mit zwei Händen geschoben werden, da der Schieber unterbrochen ist, um das Zusammenklappen zu erleichtern.

Aus der dem Oberbegriff des Anspruches 1 zugrundeliegenden WO 03/074342 A ist ein Kinderwagengestell mit einem vorderen und zwei hinteren Laufrädern bekannt, wobei beim Zusammenklappen die Laufräder um eine geneigte Schwenkachse in den zusammengeklappten Zustand überführbar sind und nebeneinander zu liegen kommen. (vgl. auch EP 1 693 275 A2).

Aus der EP 1 281 594 A2 ist ein Kinderwagen bekannt, der unter die Gruppe der Buggies fällt. Zum Zusammenklappen sind Stellantriebe mit einem drehbaren Antriebselement und ineinandergreifenden Ritzeln vorgesehen, die zwar eine stabile Abstützung ermöglichen, jedoch aufwändig herzustellen sind. Der Schiebebügel ist über Federrastbolzen fixiert, in Längsrichtung verschiebbar und kann im zusammengeklappten Zustand bis auf den Boden abgesenkt werden. Im zusammengeklappten Zustand berühren sich die vorderen und hinteren Laufräder oder liegen in einem geringen Abstand zueinander und hintereinander.

### Aufgabe der Erfindung

Ausgehend von diesem Stand der Technik liegt der vorliegenden Erfindung die Aufgabe zugrunde, einen Kinderwagen mit einem Fahrgestell zu schaffen, das platzsparend zusammenzuklappen ist.

Diese Aufgabe wird durch einen Kinderwagen mit den Merkmalen des Anspruches 1 gelöst.

Die vorderen und hinteren Laufräder sind nun um eine geneigte Schwenkachse in den zusammengeklappten Zustand überführbar, sodass sie im zusammengeklappten Zustand nebeneinander liegen. Dies führt gegenüber dem Stand der Technik zu einem weiter verringerten Packmaß, da die Räder nicht mehr aneinander stoßen, sondern zueinander versetzt angeordnet sind. Dies ist unabhängig davon, ob der Kinderwagen als Dreirad oder als Vierrad - unabhängig von der Anzahl der Laufräder je Rad - aufgebaut ist. Der Kinderwagen lässt sich damit kleiner zusammenpacken als ein üblicher Buggy, da er vorzugsweise in zwei Richtungen zusammenklappt und daher ein sehr kleines Packvolumen aufweist. Deshalb ist es möglich, größere Räder als sonst an einem Buggy üblich zu verwenden, was zu einer Verbesserung des Fahrkomforts führt. Um eine sichere Abstützung zu ermöglichen, klappen die hinteren Laufräder um geneigte Schwenkachsen, die Teil eines Rohres sind, dessen Verlängerung die Beine für die hinteren Laufräder bildet.

Vorzugsweise klappen die hinteren Laufräder um eine geneigte Schwenkachse nach innen zwischen die vorderen Laufräder, so dass der Abstand der meist auf einen geringeren Seitenabstand befindlichen vorderen Laufräder die Breite des Packmaßes bestimmt. Dieses Rohr ist elliptisch geformt, sodass ein geeigneter Schnittwinkel zu einer kreisrunden Drehfläche für die Lagerung führt. Damit ist eine zuverlässige Kraftübertragung über die Schwenkachse und die Drehflächen hinweg möglich, was zu einem stabilen Fahrgestell führt. Im aufgeklappten Gebrauchszustand ist der Radstand und die hintere Achsbreite des Wagens so groß, dass er komfortabel und kippsicher auf der Straße rollt.

Vorzugsweise ist im Bereich der Schwenkachse der Schieber angelenkt, der als durchgängiger Schieber am Fahrgestell verklemmbar ist. Dies kann über einen Exzentergriff am Schiebebügel erfolgen. Durch den durchgängigen Schieber ist der Buggy auch einhändig zu lenken und zu schieben. Der Schieber ist stufenlos höhenverstellbar.

Weitere Vorteile ergeben sich aus den Unteransprüchen und der nachfolgenden Beschreibung eines Ausführungsbeispiels.

### Kurzbeschreibung der Figuren

Im Folgenden wird die Erfindung anhand von Ausführungsbeispielen näher erläutert. Es zeigen:
- Fig. 1: eine dreidimensionale Ansicht des Fahrgestells von schräg vorne,
- Fig. 2: eine Ansicht des Fahrgestells gemäß Fig. 1 von schräg hinten.
- Fig.3: das Fahrgestell des Kinderwagens mit Schlebebügel im zusammengeklapp- ten Zustand,

- Fig. 4: eine Darstellung gemäß Fig.1 mit am Gestell befestigten Sitz,
- Fig. 5: eine Seitenansicht des Kinderwagens gemäß Fig. 4,
- Fig. 6: eine schematische Darstellung der Vorgehensweise beim Zusammenklap- pen des Kinderwagens.

### Ausführliche Beschreibung bevorzugter Ausführungsbeispiele

Die Erfindung wird jetzt beispielhaft unter Bezug auf die beigefügten Zeichnungen näher erläutert. Allerdings handelt es sich bei den Ausführungsbeispielen nur um Beispiele, die nicht das erfinderische Konzept auf eine bestimmte Anordnung beschränken sollen.

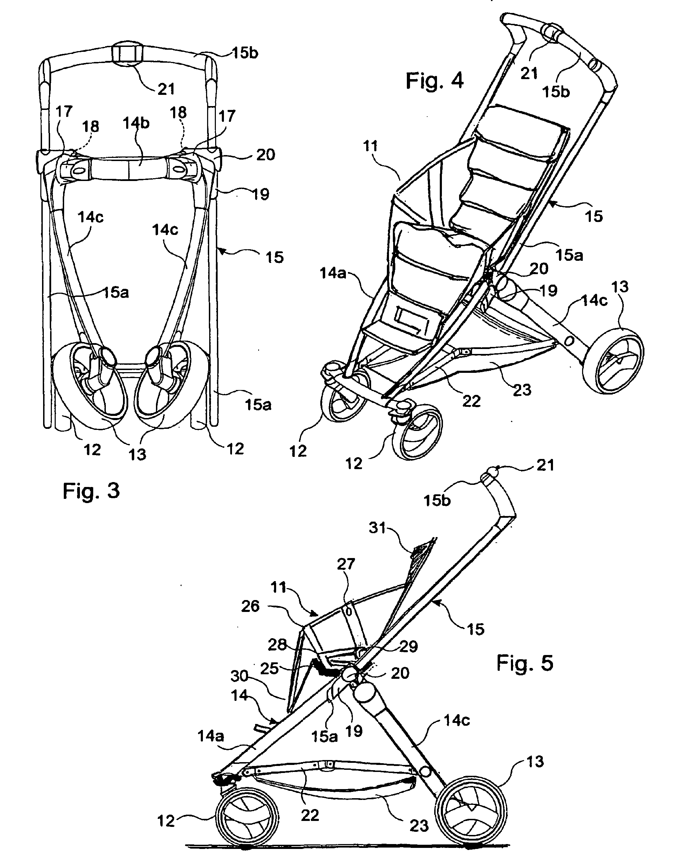

Die Figuren zeigen einen Kinderwagen mit einem gemäß Fig.4 und 5 daran befestigten oder befestigbaren Sitz. Das zusammenklappbare Fahrgestell 14 weist vordere Laufräder 12 und hintere Laufräder 13 auf. Im Ausführungsbeispiel ist der Kinderwagen als Vierrad ausgeführt, er kann jedoch auch als Dreirad ausgeführt werden, sodass vorne nur ein Rad vorgesehen ist. Zudem kann jedes Rad bedarfsweise als Zwillingsrad ausgebildet werden. Am Gestell 14 befestigt ist ein Schiebebügel 15, der vorzugsweise einen durchgängigen Griffbereich 15b aufweist.

Das Fahrgestell bildet eine Einheit, wobei der Sitz 11 bedarfsweise als separater Aufsatz am Gestell angebracht werden kann und zwar wahlweise in Fahrtrichtung oder entgegengesetzt. Der Sitz 11 kann stufenlos von der Sitz- in die Liegeposition gestellt werden, wobei vorzugsweise Rückenlehne 31 und Fußstütze 30 synchronisiert sind. Ebenso können an dem Fahrgestell 14 Babytragetasche und Babysitzschale für das Auto angebracht werden. Zur Aufnahme zusätzlicher Lasten kann ein Lastentuch 23 knapp unterhalb des Gesamtschwerpunktes vorgesehen werden. Die vorderen Laufräder 12 sind vorzugsweise schwenkbar angebracht.

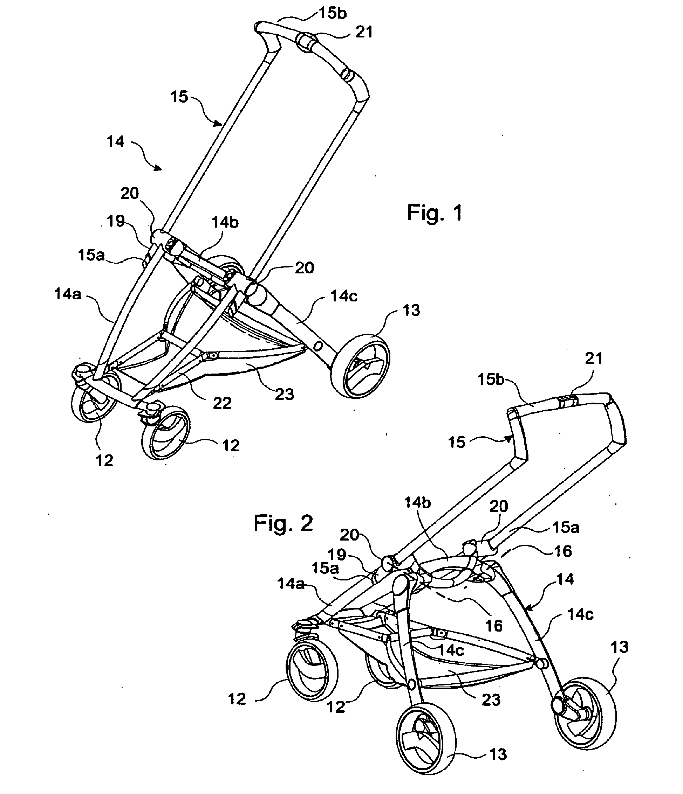

Die Figuren 1 und 2 zeigen das aufgeklappte Fahrgestell 14. Für den Transport ist ein geringes Packmaß erwünscht, so dass der Kinderwagen in den Zustand gemäß Fig. 3 zusammengeklappt wird. Dazu weist der Kinderwagen wenigstens eine geneigte Schwenkachse 16 (Fig. 2) auf, um das wenigstens eine vordere Laufrad 12 und die hinteren Laufräder 13 in den zusammengeklappten Zustand zu überführen. Im zusammengeklappten Zustand liegen die vorderen und die hinteren Laufräder gemäß Fig. 3 nebeneinander. Fig. 3 zeigt auch, dass die Drehflächen 17, 18 der im Ausführungsbeispiel zwei Schwenkachsen 16 im Gebrauchszustand gegenüber der Vertikalen zumindest zu den Seiten des Fahrgestells 14 geneigt sind. Vorzugsweise liegt eine weitere Neigung auch quer zur Fahrtrichtung vor, sodass die Schwenkachse 16 es durch ihre Anordnung ermöglicht, dass die hinteren Laufräder 13 aus dem Zustand gemäß Fig. 1 oder 2 nach vorne und innen in den Zustand gemäß Fig. 3 geklappt werden. Im Zustand gemäß Fig. 3 können die hinteren Laufräder 13 den Raum zwischen den vorderen Laufrädern 12 nutzen, was das Packvolumen deutlich verringert. Dies gestattet ebenfalls die Verwendung größerer Laufräder, zumal die meist größeren hinteren Laufräder nur noch geneigt im zusammengeklappten Zustand die Höhe des Packmaßes mitbestimmen. Im Ausführungsbeispiel bestimmt damit der Seitenabstand der vorderen Laufräder 12 die Breite des Packmaßes, wobei dieser Seitenabstand wie auch im Ausführungsbeispiel regelmäßig geringer ist als der der hinteren Laufräder 13.

Gemäß Fig. 2 und 3 sind die Drehflächen 17, 18 der Schwenkachsen 16 an einem Rohr 14b des Fahrgestells 14 vorgesehen, das im Gebrauchszustand zusammen mit den Beinen 14c über die Drehflächen hinweg ein stabiles Stützrohr bildet. An den Enden der Beine 14c sind die hinteren Laufräder 13 gelagert. Dieses Rohr 14b ist vorzugsweise ein elliptisches Rohr, wobei das Rohr im Bereich der Drehfläche 17, 18 zur Ausbildung der Schwenkachse so geschnitten ist, dass sich eine vorzugsweise kreisrunde Schnittfläche am Rohr ausbildet. Dies führt dazu, dass sich im Gebrauchszustand der Eindruck eines geschlossenen Rohrs ergibt, das einerseits Verletzungen vorbeugt, andererseits ist dieses Rohr dann auch zur Übertragung von Kräften stabilisiert, da der gesamte Rohrquerschnitt hierfür verwendet werden kann.

Damit sind die Beine 14c für die hinteren Laufräder 13 an dem Rohr 14b mit elliptischem Querschnitt aufgehängt, wobei die Drehfläche 17,18 an einem derart geneigten Winkel zur Längsachse des elliptischen Querschnitts vorgesehen ist, dass sie kreisrund ist. Um diese kreisrunde Drehfläche 17,18 drehen sich beim Zusammenklappen die Beine 14c, so dass die hinteren Laufräder im zusammengeklappten Zustand neben den vorderen Laufräder 12 liegen, die an einem vordem Rohr 14a gelagert sind. Das vordere Rohr 14a liegt mit dem Schiebebügel 15 im Gebrauchszustand etwa in einer Ebene, wobei die hinteren Laufräder 13 gegenüber dieser Ebene um die Schwenkachse 16 verschwenkt werden.

Die stabilisierende Verstrebung 22, die im unteren Bereich des Kinderwagens vorgesehen ist und dort über verschiedene Drehpunkte angelenkt ist, geht beim Zusammenklappen nach oben in Richtung des Rohres 14b. Der Schiebebügel 15b wird dann durch die Halterung 19 wie in Fig. 3 gezeigt durchgeschoben, bis seine freien Enden 15a den Boden berühren und damit eine Stütze zum Stehenbleiben des zu sammengeklappten Wagens bilden.

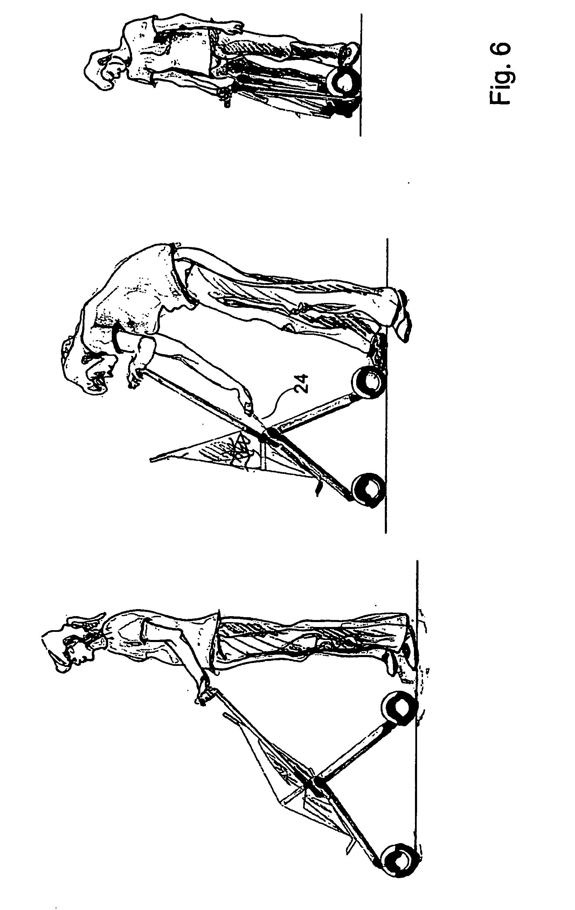

Gemäß Fig. 6 erfolgt das Zusammenklappen und Aufklappen über einen Seilzug 24, der an seinem einen Ende einen Griff hat, in dem z.B. eine Untersetzung untergebracht ist. Über diese Untersetzung wird der Seilzug betätigt, um das Ziehen zu erleichtern. Gegebenenfalls kann in zeichnerisch nicht dargestellter Weise auch eine Feder vorgesehen werden, die beim Zusammenklappen gespannt wird und das Aufklappen erleichtert. Der Seilzug 24 kann z.B. die Verstrebung 22 anheben oder die Beine 14c nach vorne ziehen, um das Zusammenklappen zu bewirken. Ausgehend von der in Fig. 6 linken Darstellung im Gebrauchszustand greift der Benutzer gemäß der mittleren Darstellung den Seilzug 24, wodurch z.B. die hinteren Laufräder zwischen die vorderen Laufräder überführt werden. Liegen die Räder beieinander, kann durch Betätigung eines Exzenters 21 der Schiebebügel bis zum Boden abgesenkt werden, wodurch sich eine Darstellung gemäß Fig. 6 rechts ergibt.

Der Schiebebügel 15 besteht aus dem durchgängigen Griffbügel 15b sowie den parallelen Holmen mit den freien Enden 15a. Im Ausführungsbeispiel mittig am Griffbügel ist der Exzenter 21 vorgesehen, der in Verbindung mit den Halterungen 19 und 20 eine stufenlose Höhenverstellung erleichtert. Der Exzenter ist so angeordnet, dass er bei Betätigung die Breite des Schiebebügels 15 verringert. Im Ruhezustand befindet er sich damit in einer Blockierstellung, in der der Griff breiter ist. Die freien Enden 15a sind in einer Halterung 19 geführt. Der Schiebebügel ist an der Halterung 19 voll umschlossen gelagert, während er an der Halterung 20 nur mit Halt nach außen oder wahlweise nach innen gelagert ist. In der Ruhestellung, d.h. wenn der Exzenter 21 den Griff verbreitert, werden die Holme des Schiebebügels gegen die Lagerung 20 gepresst, sodass ein Durchrutschen blockiert ist. Wird der Exzenter 21 betätigt, wird die Blockierung gelöst und eine Höhenverstellung bzw. ein Durchschieben des Schiebebügels durch die Halterungen 19, 20 ist möglich.

Der Sitz 11 umfasst neben der Sitzfläche eine Rückenlehne 31 sowie eine Fußraste 30. Die Teile des Sitzes sind über ein Mehreck, im Ausführungsbeispiel ein trapezförmiges Viereck an den Drehpunkten 26, 27, 28 und 29 miteinander verbunden. Der Sitz ist in einer V-förmigen Sitzaufnahme 25 gehalten und kann dort durch einfaches Aufsetzen eingerastet werden. Die V-Form erleichtert dabei eine Selbstzentrierung. Der Sitz 11 kann zur Liegefläche umgewandelt werden, indem die Rückenlehne 31 in die Horizontale gebracht wird und die Fußraste synchronisiert über das Viereck dieser Bewegung stufenlos folgt. Rückenlehne 31 und Fußraste 30 sind als Dreiecke an den entsprechenden Seiten des Vierecks angelenkt. Drehpunkt 29 wird bei der Umstellung auf Druck beansprucht. Im zusammengeklappten Zustand wird die Rückenlehne 31 nach vorne geklappt und der Punkt 29 wird aus dem Kontext des Vierecks herausgelöst. Vorzugsweise ist dabei die obere Längslinie des Vierecks nur auf Zug belastbar, indem dort die Seite des Vierecks durch ein Seil gebildet wird. Damit ist im zusammengeklapptem Zustand das Viereck aufgehoben. Die Rückenlehne 31 und die Fußraste 30 sind über eine Stoffflanke verbunden, in die dieses Seil eingearbeitet ist. Beim Zusammenklappen zieht dieser Seilzug die Rückenlehne nach vorne. In den Seitentaschen können zudem dehnbare Streifen für eine vertikale Ausformung der Flanken vorgesehen sein. Die Polsterung des Sitzes ist gegen das Durchrutschen des Kindes im Kinderwagen horizontal ausgerichtet.

Insgesamt ergibt sich damit im zusammengeklappten Zustand ein äußerst kompaktes Packvolumen, wobei dennoch die erforderliche Stabilität für den Betriebszustand durch die Gestaltung der Schwenkachse erreicht ist.

### Bezugszeichenliste

- 11: Sitz
- 12: vordere Laufräder
- 13: hintere Laufräder
- 14: Fahrgestell
- 14a: vorderes Rohr
- 14b: hinteres Rohr
- 14c: Beine
- 15: Schiebebügel
- 15a: freies Ende
- 15b: Griffbügel
- 16: Schwenkachse
- 17, 18: Lauffläche
- 19, 20: Halterung für 15
- 21: Exzenter
- 22: Verstrebung
- 23: Lastentuch
- 24: Seilzug
- 25: Sitzaufnahme
- 26-29: Drehpunkt
- 30: Fußstütze
- 31: Rückenlehne

## Patentansprüche

1. Kinderwagen mit einem daran befestigten oder befestigbaren Sitz (11), einem wenigstens ein vorderes Laufrad (12) und hintere Laufräder (13) aufweisenden, zusammenklappbaren Fahrgestell (14) sowie einem Schiebebügel (15), wobei vordere und hintere Laufräder im zusammengeklappten Zustand nebeneinander liegen, wobei das wenigstens eine vordere Laufrad (12) und die hinteren Laufräder (13) relativ zueinander um wenigstens eine geneigte Schwenkachse (16) in den zusammengeklappten Zustand überführbar sind,
**dadurch gekennzeichnet, dass** die Drehflächen (17, 18) der Schwenkachse (16) an einem Rohr (14b) des Fahrgestells (14) vorgesehen sind, das im Gebrauchszustand mit Beinen (14c), die die Laufräder (13) tragen, über die Drehflächen hinweg ein Stützrohr bildet.

2. Kinderwagen nach Anspruch 1, **dadurch gekennzeichnet, dass** die Drehflächen (17, 18) der beiden Schwenkachsen (16) gegenüber der Vertikalen zumindest zu den Seiten des Fahrgestells (14) geneigt sind.

3. Kinderwagen nach Anspruch 1 oder 2, **dadurch gekennzeichnet, dass** zwei vordere Laufräder (12) vorgesehen sind und dass die hinteren Laufräder (13) im zusammengeklappten Zustand zwischen den vorderen beiden Laufrädern (12) angeordnet sind, wobei der Seitenabstand der vorderen Laufräder (12) vorzugsweise geringer ist als der der hinteren Laufräder (13).

4. Kinderwagen nach einem der vorhergehenden Ansprüche, **dadurch gekennzeichnet, dass** die vorderen Laufräder (12) an einem vorderen Rohr gelagert sind, das mit dem Schiebebügel (15) im Gebrauchszustand etwa in einer Ebene liegt, und dass die hinteren Laufräder (13) gegenüber dieser Ebene um die Schwenkachse (16) verschwenkt werden.

5. Kinderwagen nach einem der vorhergehenden Ansprüche, **dadurch gekennzeichnet, dass** das Rohr (14b), an dem die Schwenkachse (16) vorgesehen ist, ein elliptisches Rohr ist, das vorzugsweise so angeordnet ist, dass die Drehfläche (17, 18) als eine kreisrunde Schnittfläche am Rohr ausgebildet ist.

6. Kinderwagen nach einem der vorhergehenden Ansprüche, **dadurch gekennzeichnet, dass** die Schwenkachse (16) so angeordnet ist, dass die hinteren Laufräder bei der Überführungsbewegung in den zusammengeklappten Zustand nach vorne und innen klappen.

7. Kinderwagen nach einem der vorhergehenden Ansprüche, **dadurch gekennzeichnet, dass** der Schiebebügel (15) parallele Holme aufweist, deren freie Enden (15a) an je zwei Halterungen (19, 20) geführt sind und dass am Griffbügel (15b) des Schiebebügels ein Exzenter (21) vorgesehen ist, bei dessen Blockierbetätigung die freien Enden (15a) in ihren Halterungen (19, 20) verklemmt sind.

8. Kinderwagen nach Anspruch 7, **dadurch gekennzeichnet, dass** die Halterungen (19, 20) etwa in Höhe der Schwenkachse (16) am Fahrgestell (14) angeordnet sind.

## Claims

1. Child's pushchair comprising a seat (11) fastened or fastenable thereto, a collapsible frame (14) having at least one front wheel (12) and rear wheels (13), and a pushing handle(15), wherein front and rear wheels in the collapsed state lie alongside one another, wherein the at least one front wheel (12) and the rear wheels (13) are moveable relative to one another about at least one inclined pivotal axis (16) into the collapsed state, **characterized in that** the rotational running surfaces (17, 18) of the pivotal axis (16) are provided on a tube (14b) of the frame (14), which tube (14b) in the state of use, together with legs (14c) that carry the wheels (13), forms a support tube over the rotational running surfaces.

2. Child's pushchair according to claim 1, **characterized in that** the rotational running surfaces (17, 18) of the two pivotal axes (16) are inclined relative to the vertical at least towards the sides of the frame (14).

3. Child's pushchair according to claim 1 or 2, **characterized in that** two front wheels (12) are provided and that the rear wheels (13) in the collapsed state are disposed between the two front wheels (12), wherein the lateral spacing of the front wheels (12) is preferably smaller than that of the rear wheels (13).

4. Child's pushchair according to one of the preceding claims, **characterized in that** the front wheels (12) are mounted on a front tube, which in the state of use lies approximately in the same plane as the pushing handle (15), and that the rear wheels (13) are pivoted relative to said plane about the pivotal axis (16).

5. Child's pushchair according to one of the preceding claims, **characterized in that** the tube (14b), on which the pivotal axis (16) is provided, is an elliptical tube that is preferably disposed in such a way that the rotational running surface (17, 18) is configured as a circular cut surface on the tube.

6. Child's pushchair according to one of the preceding claims, **characterized in that** the pivotal axis (16) is disposed in such a way that the rear wheels fold forwards and inwards during the movement of transfer to the collapsed state.

7. Child's pushchair according to one of the preceding claims, **characterized in that** the pushing handle (15) comprises parallel spars, the free ends (15a) of which are guided at in each case two mountings (19, 20), and that on the gripping portion (15b) of the pushing handle an eccentric (21) is provided, upon the locking actuation of which the free ends (15a) are clamped in their mountings (19, 20).

8. Child's pushchair according to claim 7, **characterized in that** the mountings (19, 20) are disposed approximately at the height of the pivotal axis (16) on the frame (14).

## Revendications

1. Poussette comportant un siège (11) fixé ou pouvant être fixé sur elle, un châssis pliable (14) présentant au moins une roue avant (12) et des roues arrières (13), ainsi qu'une barre de poussée (15), les roues avant et arrières étant adjacentes les unes aux autres à l'état plié, la ou les roue(s) avant (12) et les roues arrières (13) pouvant être amenées à l'état plié les unes sur les autres autour d'au moins un axe de pivotement incliné (16),
**caractérisée en ce que** les surfaces de rotation (17,18) de l'axe de pivotement (16) sont prévues sur un tube (14b) du châssis (14) qui forme, lors de l'utilisation, avec des jambes (14c) qui portent les roues (13), un tube de support au-delà des surfaces de rotation.

2. Poussette selon la revendication 1, **caractérisée en ce que** les surfaces de rotation (17,18) des deux axes de rotation (16) sont inclinées par rapport à la verticale au moins sur les côtés du châssis (14).

3. Poussette selon la revendication 1 ou 2, **caractérisée en ce que** deux roues avant (12) sont prévues et **en ce que** les roues arrières (13) sont disposées, à l'état plié, entre les deux roues avant (12), la distance latérale des roues avant (12) étant de préférence inférieure à celle des roues arrières (13).

4. Poussette selon l'une des revendications précédentes, **caractérisée en ce que** les roues avant (12) sont montées sur un tube avant qui se situe, en cours d'utilisation, avec la barre de poussée (15) à peu près dans un plan et **en ce que** les roues arrières (13) sont pivotées autour de l'axe de pivotement (16) du côté opposé à ce plan.

5. Poussette selon l'une des revendications précédentes, **caractérisée en ce que** le tube (14b), sur lequel est prévu l'axe de pivotement (16), est un tube elliptique qui est de préférence disposé de telle sorte que la surface de rotation (17,18) se présente sous la forme d'une section transversale circulaire sur le tube.

6. Poussette selon l'une des revendications précédentes, **caractérisée en ce que** l'axe de pivotement (16) est disposé de telle sorte que les roues arrières se plient, lors du mouvement de pliage vers l'état plié, vers l'avant et l'intérieur.

7. Poussette selon l'une des revendications précédentes, **caractérisée en ce que** la barre de poussée (15) présente des tiges parallèles, dont les extrémités libres (15a) sont guidées chacune par deux fixations (19,20) et **en ce qu'**un excentrique (21) est prévu sur la poignée (15b) de la barre de poussée, qui, lors de son actionnement de blocage verrouille les extrémités libres (15a) dans leurs fixations (19,20).

8. Poussette selon la revendication 7, **caractérisée en ce que** les fixations (19,20) sont disposées sur le châssis à peu près à la hauteur de l'axe de pivotement (16).
